(19) Europäisches Patentamt / European Patent Office / Office européen des brevets

(11) **EP 2 396 385 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(21) Anmeldenummer: **10773598.7**

(22) Anmeldetag: **14.10.2010**

(51) Int Cl.:
**C09K 11/02** (2006.01)    **C09K 11/77** (2006.01)

(86) Internationale Anmeldenummer:
**PCT/EP2010/065380**

(87) Internationale Veröffentlichungsnummer:
**WO 2011/045359 (21.04.2011 Gazette 2011/16)**

(54) **ERDALKALIMETALLSILIKAT-LEUCHTSTOFFE UND VERFAHREN ZUR VERBESSERUNG IHRER LANGZEITSTABILITÄT**

ALKALINE EARTH METAL SILICATE LUMINOPHORES AND METHOD FOR IMPROVING THE LONG-TERM STABILITY THEREOF

SUBSTANCES LUMINESCENTES À BASE DE SILICATE ALCALINO-TERREUX ET PROCÉDÉ POUR AMÉLIORER LEUR STABILITÉ À LONG TERME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2009 DE 102009044255**

(43) Veröffentlichungstag der Anmeldung:
**21.12.2011 Patentblatt 2011/51**

(73) Patentinhaber: **Leuchtstoffwerk Breitungen GmbH**
**98597 Breitungen (DE)**

(72) Erfinder:
• **KEMPFERT, Wolfgang**
  **36448 Bad Liebenstein (DE)**
• **RÖSLER, Sylke**
  **99817 Eisenach (DE)**
• **RÖSLER, Sven**
  **99817 Eisenach (DE)**
• **DUAN, Cheng-Jun**
  **36433 Bad Salzungen (DE)**
• **DENNSTEDT, Rudolf**
  **36456 Barchfeld (DE)**

(74) Vertreter: **Engel, Christoph Klaus**
**Engel Patentanwaltskanzlei**
**Marktplatz 6**
**98527 Suhl/Thüringen (DE)**

(56) Entgegenhaltungen:
| EP-A1- 0 887 397 | EP-A1- 1 160 835 |
| WO-A1-00/22065 | WO-A1-00/56471 |
| WO-A1-2009/003988 | WO-A1-2009/065480 |
| DE-C1- 19 937 420 | US-A1- 2009 050 848 |

EP 2 396 385 B1

**Beschreibung**

Die vorliegende Erfindung betrifft Erdalkalimetallsilikat-Leuchtstoffe mit einer verbesserten Langzeitstabilität im Emissionsverhalten. Derartige Leuchtstoffe werden beispielsweise als Konversionsleuchtstoff in weiß leuchtenden LED-basierten Lichtquellen verwendet. Im Weiteren betrifft die vorliegende Erfindung ein Verfahren zur Verbesserung der Langzeitstabilität von Erdalkalimetallsilikat-Leuchtstoffen.

Erdalkalimetallsilikat-Leuchtstoffe weisen eine merkliche Unbeständigkeit gegenüber Feuchtigkeit auf, die ihre Brauchbarkeit bisher in vielen Anwendungen stark einschränken. Als wesentliche durch Feuchtigkeit hervorgerufene, unerwünschte Reaktion wird bei Erdalkalimetallorthosilikat-Leuchtstoffen die folgende chemische Reaktion gesehen:

$$(Ba,Sr,Ca)_2SiO_4 + 2\,H_2O \rightarrow 2\,(Ba,Sr,Ca)OH_2 + SiO_2$$

Die Erdalkalimetallsilikat-Leuchtstoffe neigen bei längerer Lagerung zur Agglomeration und Verklumpung, wodurch die Verwendung der Leuchtstoffe stark eingeschränkt wird. Weiterhin zeigen viele Erdalkalimetallsilikat-Leuchtstoffe bei einer längeren Lagerung oder bei einem längeren Einsatz, insbesondere in LED-basierten Lichtquellen, irreversible Lumineszenzverluste und Degradationserscheinungen. Dies tritt insbesondere bei höheren Luftfeuchten auf, sodass diese Leuchtstoffe nur bedingt für Feuchtraumapplikationen und Anwendungen in Gebieten mit erhöhter Luftfeuchte geeignet sind.

Die DD 293 128 A5 zeigt ein Verfahren zum Aufbringen von Schutzschichten auf Seltenerdoxidhalogenid-Leuchtstoffe. Die Schutzschichten dienen dazu; den Angriff von Wasser, Wasserdampf, Luftfeuchtigkeit und anderen atmosphärischen sowie bei der Verarbeitung wirkenden Einflüssen zu verhindern, sodass die Leuchtstoffeigenschaften nicht beeinträchtigt werden. Die Schutzschicht besteht aus einer schwerlöslichen Wolframat- oder/und Molybdat-Verbindung.

In dem wissenschaftlichen Artikel von Guo, C.; Luan, L.; Huang, D.; Su, Q. und Lv, Y.: "Study on the stability of phosphor SrAl2O4:Eu2+, Dy3+ in water and method to improve its moisture resistance" in Materials Chemistry and Physics, 106(2007), Seiten 268-272 wird die Verbesserung des Feuchtigkeitswiderstandes von $SrAl_2O_4$:$Eu^{2+}$, $Dy^{3+}$ durch thermische Behandlung des Leuchtstoffs mit $NH_4HF_2$ beschrieben. Hierbei entsteht eine Schutzschicht aus Strontiumfluorid.

Die EP 1 124 913 B1 und die WO 00/22065 A1 zeigen ein Verfahren zum Behandeln von Rotlicht emittierenden Erdalkalimetallsulfidphosphorteilchen zur Verbesserung ihrer Feuchtigkeitsbeständigkeit. Die Phosphorteilchen werden in einem Lösungsmittel dispergiert, welches ein Fluorierungsmittel enthält. Hierbei entsteht auf den Phosphorteilchen ein flüssigkeitsundurchlässiger fluorierter Überzug.

In dem wissenschaftlichen Artikel von Guo, C.; Chu, B. und Su, Q.: "Improving the stability of alkaline earth sulfide-based phosphors" in Applied Surface Science, 225(2004), Seiten 198-203 wird die Beschichtung des Erdalkalimetallsulfidbasierten Leuchtstoffs $Ca_{0,8}Sr_{0,2}S$:$Eu^{2+}$, $Tm^{3+}$ durch ZnO- und $Al_2O_3$-Partikel gezeigt.

Die DE 698 30 180 T2 zeigt verkapselte Leuchtstoffpartikel, die jeweils eine im Wesentlichen transparente Mehrfachoxidbeschichtung auf Aluminiumoxidbasis besitzen. Die Mehrfachmetalloxidbeschichtung umfasst ein Aluminiumoxid und mindestens ein weiteres Metalloxid.

In der DE 10 2007 056 343 A1 und in der WO 2009/065480 A1 werden oberflächenmodifizierte Leuchtstoffpartikel auf der Basis von $(Ca,Sr,Ba)_2SiO_4$ gezeigt, auf die eine Metall-, Übergangsmetall- oder Halbmetalloxidbeschichtung und eine organische Beschichtung aufgebracht sind. Die Beschichtung mit dem Metall-, Übergangsmetall- oder Halbmetalloxid erfolgt in einem nasschemischen Prozess oder einem Aufdampfprozess und dient der Anpassung der Leuchtstoffoberflächeneigenschaften an die chemischen Eigenschaften von Bindemitteln, wie sie in LED-basierten Lichtquellen eingesetzt werden. Beim Beschichten erfolgt keine chemische Reaktion mit dem Leuchtstoffpartikel.

Die EP 1 160 835 A1 lehrt eine Gasentladungslampe mit einer Leuchtstoffschicht, welche bevorzugt einen Leuchtstoff der Zusammensetzung $BaMgAl_{10}O_{17}$:Eu umfasst. Der Leuchtstoff ist bevorzugt mit $Ba_3(PO_9)_2$ oder mit $MgF_2$ beschichtet.

Die WO 2009/003988 A1 zeigt Erdalkalimetallsiliziumnitrid-Leuchtstoffe, wie $BaSiN_2$:Eu, die bevorzugt durch Behandlung mit $NH_4F \cdot HF$ beschichtet sind.

Die EP 0 887 397 A1 lehrt UV-Leuchtstoffe, wie z. B. $Ba(Al, Mg)_{11}O_{19}$:$EU^{2+}$, welche mit Polyphosphaten bestehend aus zweifach verknüpften $PO_4$-Tetraedern als Grundeinheit beschichtet sind.

Aus der DE 199 37 420 C1 ist ein Plasmabildschirm mit einer Leuchtstoffschicht bekannt, welche bevorzugt einen Leuchtstoff der Zusammensetzung $BaMgAl_{10}O_{17}$:Eu umfasst. Der Leuchtstoff ist bevorzugt mit $AlPO_4$ beschichtet.

Die WO 00/56471 A1 lehrt ein Verfahren zur Verbesserung der Feuchtigkeitsbeständigkeit von Leuchtstoffen, insbesondere von Europium-aktivierten Strontiumaluminaten. Bei diesem Verfahren werden die Leuchtstoffkörner mit $NH_4F$ oder $NH_4HF_2$ behandelt.

Die DE 10 2007 053 285 A1 zeigt beschichtete Leuchtstoffpartikel, welche durch Mischen von mindestens zwei Edukten und mindestens einem Dotierstoff nach nasschemischen Methoden und anschließender Kalzinierung zu Leuchtstoffprecursoren hergestellt werden. Es erfolgt eine Beschichtung der Leuchtstoffpartikel mit einem Metall-, Übergangsmetall- oder Halbmetalloxid nach nasschemischen Methoden und anschließender Kalzinierung.

Die US 2009/050848 A1 zeigt u. a. verschiedene Erdalkalimetallsilikat-Leuchtstoffe, die bevorzugt mit Nanopartikeln aus einem Erdalkalimetallhydroxidcarbonat beschichtet sind. Zum Aufbringen dieser Beschichtung werden Harnstoff und ein metallischer Ausgangsstoff in einer Lösung bereitgestellt.

Die Aufgabe der vorliegenden Erfindung besteht ausgehend von der in der US 2009/050848 A1 gezeigten Lösung darin, Erdalkalimetallsilikat-Leuchtstoffe bereitzustellen, die eine verbesserte Langzeitstabilität, insbesondere gegen Feuchtigkeit aufweisen. Weiterhin ist ein entsprechendes Verfahren zur Verbesserung der Langzeitstabilität von Erdalkalimetallsilikat-Leuchtstoffen bereitzustellen.

Die genannte Aufgabe wird durch einen Leuchtstoff gemäß dem beigefügten Anspruch 1 gelöst. Die Aufgabe wird weiterhin durch ein Verfahren gemäß dem beigefügten nebengeordneten Anspruch 5 gelöst.

Bei dem erfindungsgemäßen Leuchtstoff handelt es sich um einen Erdalkalimetallsilikat-Leuchtstoff. Folglich weist der Leuchtstoff ein Grundgitter gemäß der allgemeinen chemischen Formel $EA_xSi_yO_z$, mit x, y, z > 0 auf. Der Bestandteil EA ist durch ein oder mehrere Erdalkalimetalle gebildet. In das Grundgitter ist ein Aktivator, wie beispielsweise $EU^{2+}$ oder $Mn^{2+}$ dotiert. Es können auch mehrere Aktivatoren sowie weitere Koaktivatoren oder Sensibilisatoren in das Grundgitter dotiert sein.

Der erfindungsgemäße Leuchtstoff hat die grundlegende Eigenschaft, Strahlung in einem ersten Wellenlängenbereich zu absorbieren und Strahlung in einem zweiten, sich vom ersten Wellenlängenbereich unterscheidenden Wellenlängenbereich zu emittieren. Es handelt sich somit um einen Konversionsleuchtstoff. Bei einer typischen Ausführungsform absorbiert der Leuchtstoff Strahlung im blauen und/oder ultravioletten Wellenlängenbereich und emittiert Strahlung im sichtbaren Wellenlängenbereich, beispielsweise im gelbgrünen, gelben und/oder orangefarbigen Wellenlängenbereich. Die Erfindung ist jedoch nicht auf bestimmte Wellenlängenbereiche beschränkt.

Der erfindungsgemäße Leuchtstoff ist in Form von Körnern ausgebildet. Diese Körner des Leuchtstoffes bilden Partikel aus, welche beispielsweise einen Durchmesser zwischen 1 μm und 40 μm besitzen. Die Erfindung ist nicht auf bestimmte Korngrößen beschränkt. Insbesondere ist die Erfindung auch für Körner geeignet, deren Durchmesser kleiner als 20 μm ist. Erfindungsgemäß sind die Körner des Leuchtstoffs an ihrer Oberfläche dadurch chemisch modifiziert, dass zumindest Teile ihrer Oberflächen durch eine chemische Verbindung der allgemeinen Formel $EA_uZ_2$ gebildet sind. Der Bestandteil Z ist durch Anionen gebildet, welche mit den EA-Kationen des Leuchtstoffes chemisch vereinigbar sind. Die Variable u ist gleich einer Ionenladung der Anionen Z und es ist bevorzugt u = 2 oder u = 3, jedenfalls ist u > 0. Ist die Variable u eine gerade Zahl, so kann die allgemeine Formel auch durch eine Formel repräsentiert werden, in welcher die Koeffizienten mathematisch gekürzt sind. Der erfindungsgemäße Leuchtstoff zeichnet sich dadurch aus, dass die Oberflächen der Körner chemisch modifiziert sind. Die chemische Modifikation hat zu einer chemischen Verbindung des im Grundgitter vorhandenen Erdalkalimetalls geführt. Die Erdalkalimetallionen des Grundgitters sind zumindest in Teilen der Oberfläche der Körner eine chemische Verbindung mit den Anionen Z eingegangen. Bei der chemischen Modifikation handelt es sich somit nicht um eine ausschließlich physikalisch wirkende Beschichtung, welche beispielsweise durch eine chemische oder physikalische Gasphasenabscheidung (CVD, PVD) auf die Körner des Leuchtstoffes aufgebracht wurde. Ein weiterer Unterschied zu einer solchen Beschichtung besteht darin, dass die erfindungsgemäße chemische Modifikation nicht zwangsläufig auf der gesamten Oberfläche der Körner des Leuchtstoffes erfolgt sein muss. Es genügt, wenn Teile der Oberfläche der Körner des Leuchtstoffes die chemische Bindung der allgemeinen Formel $EA_uZ_2$ aufweisen. Diese chemische Verbindung verhindert bzw. verlangsamt das Eintreten von Wasser und/oder das Austreten des Reaktionsproduktes mit Wasser in bzw. aus den Körnern des Leuchtstoffes auf Grund verringerter Diffusionsgeschwindigkeiten. Die durch die chemische Modifikation an der Oberfläche der Körner gebildete chemische Verbindung ist bevorzugt schwer löslich, wodurch der Leuchtstoff über eine sehr lange Zeit gegen Feuchtigkeit geschützt ist.

Erfindungsgemäß ist das Erdalkalimetall EA des Grundgitters des Leuchtstoffes an zumindest Teilen der Oberfläche der Körner mit den Anionen Z chemisch vereinigt. Die Anionen Z sind in Form von Molekülanionen gebildet. Der Fachmann kann geeignete Anionen entsprechend der konkreten Zusammensetzung, des Grundgitters und entsprechend des gewählten Verfahrens zur Erzeugung der chemischen Modifikation auswählen.

Die Verbindung $EA_uZ_2$ kann beispielsweise durch $(Sr,Ba,Ca)SO_4$, $(Sr,Ba,Ca)_3(PO_4)_2$, $(Sr,Ba,Ca)CO_3$, $(Sr,Ba,Ca)C_2O_4$, $(Sr,Ba,Ca)SiO_3$ und $(Sr,Ba,Ca)SiF_6$ gebildet sein.

Der erfindungsgemäße Leuchtstoff zeichnet sich ferner dadurch aus, dass die an den Oberflächen der Körner vorhandene chemische Verbindung der allgemeinen Formel $EA_uZ_2$ transparent oder zumindest weitgehend transparent für die Strahlung im ersten Wellenlängenbereich und für die Strahlung im zweiten Wellenlängenbereich ist. Daher führt die chemische Modifikation an der Oberfläche der Körner nicht dazu, dass die Effizienz des Leuchtstoffs verringert ist. Insbesondere zeigt die chemische Verbindung der allgemeinen Formel $EA_uZ_2$ keine absorbierenden Eigenschaften für Strahlung mit einer Wellenlänge von mehr als 380 nu.

Der erfindungsgemäße Leuchtstoff weist den Vorteil auf, dass er aufwandsarm herstellbar ist und auf unterschiedliche Weise angepasst an den konkreten Leuchtstoff und an die konkrete Anwendung mit der erfindungsgemäß chemisch modifizierten Oberfläche hergestellt werden kann.

Die Anionen sind durch eine oder mehrere der folgenden chemischen Formeln beschrieben: $SO_4^{2-}$ $PO_4^{3-}$, $CO_3^{2-}$, $C_2O_4^{2-}$ $SiO_3^{2-}$ und $SiF_6^{2-}$. Die Anionen dieser Formeln sind in besonderem Maße dazu geeignet, mit den Kationen des Erdalkalimetalls chemisch verbunden zu werden, um an der Oberfläche der Körner des Leuchtstoffs eine transparente, schwerlösliche, Modifikation des Leuchtstoffes zu bilden. Im Falle der Anionen $SO_4^{2-}$ $CO_3^{2-}$, $C_2O_4^{2-}$, $SiO_3^{2-}$ und $SiF_6^{2-}$ ist u = 2. Im Falle der Anionen $PO_4^{3-}$ ist u = 3.

Bei einer bevorzugten Ausführungsform des erfindungsgemäßen Leuchtstoffs ist das Grundgitter durch die Formel $(Ba_a,Sr_b,Ca_c)_2SiO_4$ beschrieben. Zumindest eine der Variablen a, b und c ist größer als. 0 und es gilt a + b + c = 1. Bei diesem Leuchtstoff handelt es sich um ein Erdalkalimetallorthosilikat, welches insbesondere für die Anwendung in LED-basierten Lichtquellen geeignet ist.

Bei weiteren bevorzugten Ausführungsformen des erfindungsgemäßen Leuchtstoffs umfasst das EA im Grundgitter Magnesium und ein weiteres Erdalkalimetall. Bei diesen Ausführungsformen weist das Grundgitter eine der folgenden chemischen Formeln auf: $EA'_3MgSi_2O_8$, $EA'_2MgSi_2O_7$ und $EA'_2MgSiO_5$, wobei EA' durch ein oder mehrere Erdalkalimetalle ausgenommen Magnesium gebildet ist.

Weitere bevorzugte Ausführungsformen des erfindungsgemäßen Leuchtstoffes weisen ein Grundgitter der chemischen Formel $EA_3SiO_5$ oder $EASiO_3$ auf.

Bei einer besonderen Ausführungsform des erfindungsgemäßen Leuchtstoffes ist jeweils die gesamte Oberfläche der Körner des Leuchtstoffes durch die chemische Verbindung der allgemeinen Formel $EA_uZ_2$ gebildet. Folglich sind die gesamten Oberflächen der Körner chemisch modifiziert.

Das Silizium im Erdalkalimetallsilikat kann teilweise durch Aluminium, Bor, Germanium, Gallium und/oder Phosphor ersetzt sein. Derartige Möglichkeiten der Modifikation von Erdalkalimetallsilikat-Leuchtstoffen sind dem Fachmann bekannt. Jedenfalls wird der Fachmann einen derart modifizierten Leuchtstoff auch als Erdalkalimetallsilikat bezeichnen und in den meisten Fällen durch die allgemeine Formel $EA_xSi_yO$ benennen. Für eine besonders genaue Benennung wird der Fachmann ggf. die allgemeine Formel $EA_x(Si,Al,B,Ge,Ga,P)_yO_z$ oder auch die Formel $EA_x(Si_{l-e-f-g-h-i}Al_eB_f$-$Ge_gGa_hP_i)yO_z$ mit e, f, g, h und/oder i > 0 angeben. Eine weitere mögliche Modifikation der Erdalkalimetallsilikat-Leuchtstoffe ist der Einbau von bis zu 10 Mol-% Halogenidionen.

Das erfindungsgemäße Verfahren dient der Verbesserung der Langzeitstabilität von Leuchtstoffen, insbesondere von Erdalkalimetallsilikat-Leuchtstoffen. Diese Leuchtstoffe weisen ein Grundgitter gemäß der allgemeinen chemischen Formel $EA_xSi_yO_z$ auf, wobei EA durch ein oder mehrere Erdalkalimetalle gebildet ist und die Bedingung x, y, z > 0 gilt. Der zu verbessernde Leuchtstoff liegt in Form von Körnern vor. Das erfindungsgemäße Verfahren umfasst zunächst einen Schritt, bei welchem ein chemischer Stoff ausgewählt wird, welcher Anionen zur Verfügung stellt, die mit den EA-Kationen des Leuchtstoffes chemisch vereinigbar sind. Bei dem chemischen Stoff kann es sich beispielsweise um ein chemisches Element oder eine chemische Verbindung handeln, welche fest, flüssig oder gasförmig vorliegt. Bei dem chemischen Stoff kann es sich aber auch um ein Stoffgemisch handeln, beispielsweise um eine wässrige Lösung. Die für das erfindungsgemäße Verfahren relevante Eigenschaft des chemischen Stoffes ist, dass durch diesen chemischen Stoff Anionen freigesetzt werden können, welche mit den Kationen des Erdalkalimetalls chemisch vereinigbar sind. In einem weiteren Schritt des erfindungsgemäßen Verfahrens ist der chemische Stoff mit den Körnern des Leuchtstoffs zu vermischen, um eine chemische Reaktion zwischen dem chemischen Stoff, insbesondere den vom chemischen Stoff freigesetzten Anionen, mit der Oberfläche der Körner des Leuchtstoffes, insbesondere mit den dort vorhandenen Kationen des Erdalkalimetalls vorzubereiten. Im Weiteren sind Bedingungen zu gewähren, um die genannte chemische Reaktion ablaufen zu lassen. Hierfür sind die mit dem chemischen Stoff vermischten Körner des Leuchtstoffes beispielsweise zu erwärmen, zu rühren oder einer besonderen Atmosphäre auszusetzen. Der Fachmann wird die Bedingungen entsprechend dem gewählten chemischen Stoff und der konkreten Zusammensetzung des Erdalkalimetallsilikates wählen. Die chemische Reaktion kann wie folgt beschrieben werden:

$$u\ EA^{2+}\ +\ 2\ Z^{u-}\ \rightarrow\ EA_uZ_2$$

Der Bestandteil Z steht für die Anionen. Die Variable u gleicht der Ionenladung der Anionen Z und es ist bevorzugt u = 2 oder u = 3, jedenfalls ist u > 0. Die Reaktion findet insbesondere an freien Oberflächen der Körner des Leuchtstoffes statt. Mit zunehmender Dicke der als $EA_uZ_2$ modifizierten Bereiche verringert sich die Reaktionsgeschwindigkeit, sodass die Gesamtumsetzung diffusionsbestimmt ist. Zugleich bedingt dieser Zusammenhang die bevorzugte Ausbildung dichter $EA_uZ_2$-Bereiche anstelle von punktförmigen Ausbildungen. In einem weiteren Schritt des erfindungsgemäßen Verfahrens sind die Körner des Leuchtstoffes nach der chemischen Reaktion nachzubehandeln, nämlich zu separieren, beispielsweise dadurch, dass sie gewaschen, getrocknet oder von einem Gasstrom getrennt werden.

Mit dem erfindungsgemäßen Verfahren ist eine aufwandsarme und anpassbare Möglichkeit aufgezeigt, die Langzeitstabilität von Erdalkalimetallsilikat-Leuchtstoffen erheblich zu verbessern. Wesentlich dabei ist, dass die Umsetzung des EA des Leuchtstoffkorns mit den Anionen Z des chemischen Stoffes thermodynamisch bedingt an den energetisch bevorzugten Stellen forciert abläuft, die auch besonders anfällig für die Umsetzung mit Wasser sind. Werden diese energetisch bevorzugten Stellen durch die genannte Modifizierung für eine Umsetzung mit Wasser blockiert, resultiert daraus bereits eine deutliche Steigerung der Feuchtestabilität der Leuchtstoffkörner. Wird die Reaktion zwischen den Leuchtstoffkörnern und dem chemischen Stoff fortgesetzt, resultiert schließlich ein Material mit vollständig modifizierter Oberfläche und wesentlich gesteigerter Langzeitstabilität. Die Dicke der modifizierten Oberflächenschicht ist proportional zur Reaktivität der ursprünglichen Oberfläche. Somit ist gewährleistet, dass die modifizierten Körner eine isotrope Stabilisierung erfahren haben und es keine bevorzugten Angriffspunkte mehr gibt.

Die vom chemischen Stoff bereitzustellenden Anionen müssen geeignet sein, mit den Kationen des Erdalkalimetalls chemisch vereinigt werden zu können. Dabei ist der chemische Stoff einerseits so auszuwählen, dass die von ihm bereit gestellten Anionen mit den Kationen des Erdalkalimetalls eine chemische Verbindung eingehen, welche besonders schwer löslich und in einem hohen Maße transparent ist. Andererseits ist der chemische Stoff so auszuwählen, dass die chemische Reaktion zwischen den vom chemischen Stoff bereitgestellten Anionen mit den Kationen des Erdalkalimetalls EA ermöglicht ist. Erfindungsgemäß eignen sich chemische Stoffe, die Anionen bereitstellen, die durch eine der folgenden chemischen Formeln beschrieben sind: $SO_4^{2-}$, $PO_4^{3-}$, $CO_3^{2-}$, $C_2O_4^{2-}$, $SiO_3^{2-}$ und $SiF_6^{2-}$.

Bei einer ersten bevorzugten Ausführungsform des erfindungsgemäßen Verfahrens erfolgt die chemische Reaktion in einer wässrigen Suspension. Hierfür erfolgt das Auswählen des chemischen Stoffes dadurch, dass eine lösliche, die Anionen enthaltende chemische Verbindung ausgewählt und in Wasser aufgelöst wird. Das Vermischen der Körner des Leuchtstoffes mit dem chemischen Stoff erfolgt dadurch, dass die Körner in die wässrige Lösung gegeben werden und die wässrige Lösung umgerührt wird. Das Separieren der Körner des Leuchtstoffs erfolgt bevorzugt zunächst durch ein Dekantieren, ein Filtrieren oder ein Zentrifugieren. Es schließt sich ein Trockenprozess an. Gegebenenfalls sind die Körner vor dem Trocknen mit Wasser zu waschen und in Ethanol zu suspendieren.

Bei einer alternativen bevorzugten Ausführungsform des erfindungsgemäßen Verfahrens erfolgt die Modifikation der Oberfläche der Körner durch eine Festkörper-Gasphasenreaktion. Hierfür ist der chemische Stoff in Form eines Gases, wie beispielsweise gasförmiges $SO_3$, auszuwählen. Das Vermischen der Körner des Leuchtstoffes mit dem chemischen Stoff erfolgt dadurch, dass die Körner vom Gas umströmt werden, beispielsweise dadurch, dass die Körner in einem Ofen einem Strom des Gases ausgesetzt werden.

Bei einer weiteren alternativen Ausführungsform des erfindungsgemäßen Verfahrens erfolgt die chemische Modifikation durch eine chemische Reaktion zweier fester Stoffe in einem trockenen Zustand. Hierfür erfolgt das Auswählen des chemischen Stoffes dadurch, dass eine pulverförmige die Anionen enthaltende chemische Verbindung ausgewählt wird. Das Vermischen der Körner des Leuchtstoffes mit dem chemischen Stoff erfolgt dadurch, dass die Körner mit der pulverförmigen chemischen Verbindung vermengt und homogenisiert werden, wodurch die chemische Reaktion vorbereitet wird.

Weitere Vorteile, Einzelheiten und Weiterbildungen der Erfindung ergeben sich aus der nachfolgende Beschreibung bevorzugter Ausführungsformen, unter Bezugnahme auf die Zeichnung. Es zeigen:

Fig. 1: ein Diagramm der Langzeitstabilität eines erfindungsgemäßen durch Hexafluorosilikat modifizierten Erdalkalisilikat-Leuchtstoffs;

Fig. 2: ein Diagramm der Langzeitstabilität eines erfindungsgemäßen mit Ammoniumcarbonatlösung modifizierten Erdalkalimetallsilikat-Leuchtstoffs; und

Fig. 3: ein Diagramm der Langzeitstabilität eines mit Ammoniumfluorid modifizierten Erdalkalimetallsilikat-Leuchtstoffs.

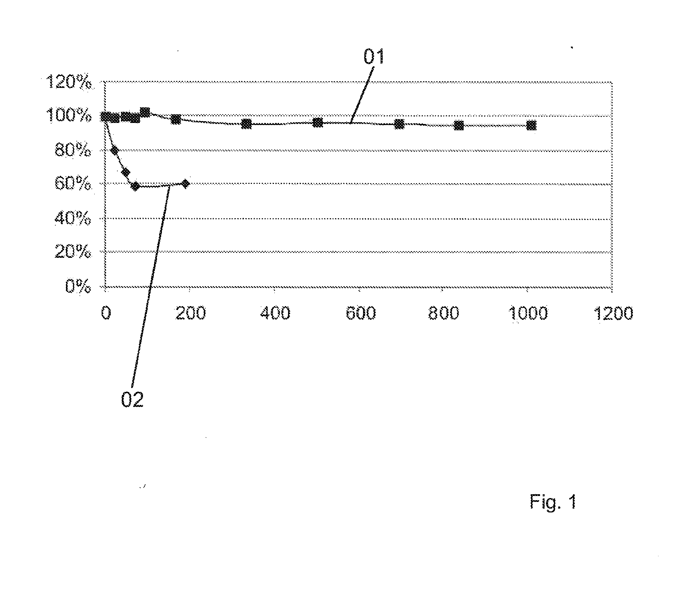

Fig. 1 zeigt ein Diagramm, in welchem die Langzeitstabilität eines durch Hexafluorosilikat modifizierten Erdalkalimetallsilikat-Leuchtstoffs mit der Langzeitstabilität eines Erdalkalimetallsilikat-Leuchtstoffs gemäß dem Stand der Technik verglichen ist. Für die erfindungsgemäße Modifikation der Oberflächen der Körner des Erdalkalimetallsilikat-Leuchtstoffs wurde eine Lösung von $(NH_4)_2SiF_6$ in deionisiertem Wasser hergestellt. Zu 200 ml dieser wässrigen Lösung wurden unter Rühren 50 g des Erdalkalimetallsilikat-Leuchtstoffs $(Ba,Sr,Ca,Mg)_2SiO_4$:Eu zugefügt. Die wässrige Lösung wurde erwärmt und die Temperatur bei 25°C konstant gehalten. Das Rühren wurde nach 20 min eingestellt. Das an der Oberfläche der Körner chemisch modifizierte Erdalkalimetallsilikat wurde danach dreimal dekantierend mit Wasser gewaschen. Der suspendierte Erdalkalimetallsilikat-Leuchtstoff wurde abgesaugt und letztlich bei 105°C getrocknet. Die konkreten Versuchsparameter sind nicht auf die hier angegebenen Werte beschränkt. Die modifizierte Oberfläche besteht überwiegend aus Erdalkalihexafluorosilikat $EASiF_6$. Ein Graph 01 stellt die Abhängigkeit der relativen Emissionsintensität in Prozent über die Dauer in Stunden einer Lagerung bei einer Temperatur von 60°C und bei einer Luftfeuchtigkeit von 90% dar. Der erfindungsgemäße modifizierte Erdalkalimetallsilikat-Leuchtstoff weist auch nach einer Lagerdauer von über 1000 Stunden eine relative Emissionsintensität von weit über 90% auf. Im Diagramm ist weiterhin ein Graph 02 dargestellt, welcher die relative Emissionsintensität eines nicht modifizierten Erdalkalimetallsilikat-Leuchtstoffs gemäß dem Stand der Technik in Abhängigkeit von der Dauer in Stunden einer Lagerung bei einer Temperatur von 60°C und 90% Luftfeuchtigkeit darstellt. Der Graph 02 verdeutlicht, dass die relative Emissionsintensität bei diesem Leuchtstoff gemäß dem Stand der Technik bereits nach einigen zehn Stunden auf weniger als 60% abgesunken ist.

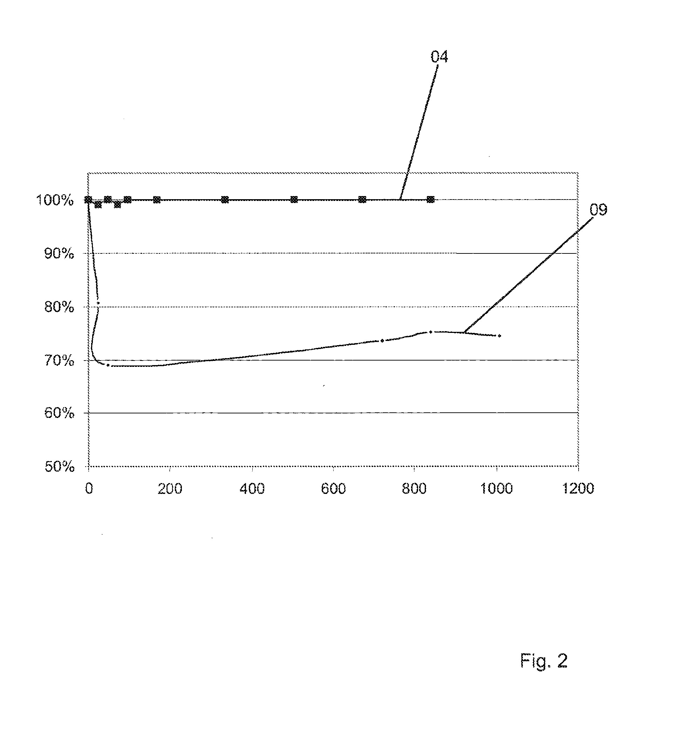

Fig. 2 zeigt ein Diagramm der Langzeitstabilität eines erfindungsgemäßen mit einer Ammoniumcarbonatlösung modifizierten Erdalkalimetallsilikat-Leuchtstoffs im Vergleich zur Langzeitstabilität eines Erdalkalimetallsilikat-Leuchtstoffs gemäß dem Stand der Technik. Für die erfindungsgemäße Modifikation mit einer Ammoniumcarbonatlösung wurde zunächst eine Lösung von $NH_4HCO_3$ in deionisiertem Wasser hergestellt. 200 ml dieser wässrigen Lösung wurden unter Rühren 25 g des Erdalkalimetallsilikat-Leuchtstoffs gemäß der allgemeinen Formel $(Ba,Sr,Ca)_3MgSi_2O_8$:Eu hinzugefügt. Die wässrige Lösung wurde erwärmt und die Temperatur bei 40°C konstant gehalten. Das Rühren wurde nach einer Dauer von 60 min beendet. Das modifizierte Erdalkalimetallsilikat wurde dreimal dekandierend mit Wasser gewaschen, abgesaugt und letztlich bei 105°C getrocknet. Die konkreten Versuchsparameter sind nicht auf die hier angegebenen Werte beschränkt. Die modifizierte Oberfläche besteht überwiegend aus Erdalkalicarbonat $EACO_3$. Die relative Emissionsintensität des auf diese Weise modifizierten erfindungsgemäßen Erdalkalimetallsilikat-Leuchtstoffs ist in Abhängigkeit von der Dauer in Stunden einer Lagerung bei einer Temperatur von 60°C und einer Luftfeuchtigkeit von 90% durch einen Graphen 04 dargestellt. Die relative Emissionsintensität dieses erfindungsgemäßen Erdalkalimetallsilikat-Leuchtstoffs beträgt bei einer Lagerdauer von mehreren hundert Stunden weiterhin nahezu 100%. Hingegen beträgt die relative Emissionsintensität eines nicht modifizierten Erdalkalimetallsilikat-Leuchtstoffs gemäß dem Stand der Technik, welche durch einen Graphen 09 in Abhängigkeit von der Lagerdauer in Stunden dargestellt ist, bereits nach einer Lagerdauer von weniger als 100 Stunden nur etwa 70%.

Für die erfindungsgemäße Modifikation bei einer weiteren bevorzugten Ausführungsform mit einer Ammoniumphosphat-/Ammoniumoxalatlösung wurde zunächst eine 0,05 M Lösung von $(NH_4)_3PO_4$ und eine 0,05 M Lösung von $(NH_4)_2C_2O_4$ in deionisiertem Wasser hergestellt und gleiche Volumina beider Lösungen vereinigt. 200 ml dieser wässrigen Lösung wurden unter Rühren 25 g des Erdalkalimetallsilikat-Leuchtstoffs gemäß der allgemeinen Formel $(Ba,Sr,Ca)_2SiO_4$:Eu hinzugefügt. Die wässrige Lösung wurde erwärmt und die Temperatur bei 40°C konstant gehalten. Das Rühren wurde nach einer Dauer von 30 min beendet. Das modifizierte Erdalkalimetallsilikat wurde dreimal dekandierend mit Wasser gewaschen, abgesaugt und letztlich bei 95°C getrocknet. Die konkreten Versuchsparameter sind nicht auf die hier angegebenen Werte beschränkt. Die modifizierte Oberfläche besteht überwiegend aus Erdalkaliphosphat $EA_3(PO_4)_2$ und Erdalkalioxalat $EAC_2O_4$. Der erfindungsgemäße modifizierte Erdalkalimetallsilikat-Leuchtstoff weist auch nach einer Lagerdauer von über 1000 Stunden eine relative Emissionsintensität von weit über 90% auf. Bei einem nicht modifizierten Erdalkalimetallsilikat-Leuchtstoffs gemäß dem Stand der Technik ist hingegen die relative Emissionsintensität während einer Lagerung bei einer Temperatur von 60°C und 90% Luftfeuchtigkeit bereits nach einigen zehn Stunden auf weniger als 60% abgesunken.

Bei einer alternativen bevorzugten Ausführungsform des erfindungsgemäßen Verfahrens erfolgt die chemische Reaktion zur Modifikation der Oberfläche der Körner des Erdalkalimetallsilikat-Leuchtstoffs durch eine Festkörper-Gasphasenreaktion. Dies kann beispielsweise dadurch erfolgen, dass 25 g des Erdalkalimetallsilikat-Leuchtstoffes der Formel $(Ba,Sr,Ca)_2M_9Si_2O_7$:Eu auf einem Aluminiumoxidschiffchen in einem Röhrenofen unter strömendem Stickstoff eines Volumenstroms von 5 l/min auf eine Temperatur von 200°C erwärmt werden. Der in den Röhrenofen strömende Stickstoff wird vor dem Eintritt in den Röhrenofen angefeuchtet, indem er durch eine wassergefüllte Waschflasche perlt. Nachdem der Erdalkalimetallsilikat-Leuchtstoff auf 200°C erwärmt wurde, wird ein zweiter Gasstrom von $SO_3$ mit einem maximalen Volumenstrom von 1 l/min eingeleitet. Die beiden Gasströme umströmen den Erdalkalimetallsilikat-Leuchtstoff, sodass die chemische Reaktion zur Modifikation der Körner des Leuchtstoffs erfolgen kann. Nach einer Reaktionsdauer von 30 min wird der $SO_3$-Gasstrom beendet und die Zufuhr von Wärme eingestellt, sodass der Leuchtstoff in der Stickstoffatmosphäre rasch abkühlt. Im Aluminiumoxidschiffchen ist nunmehr der erfindungsgemäße modifizierte Erdalkalimetallsilikat-Leuchtstoff vorhanden. Statt des $SO_3$ kann auch $CO_2$ als Gasstrom verwendet werden.

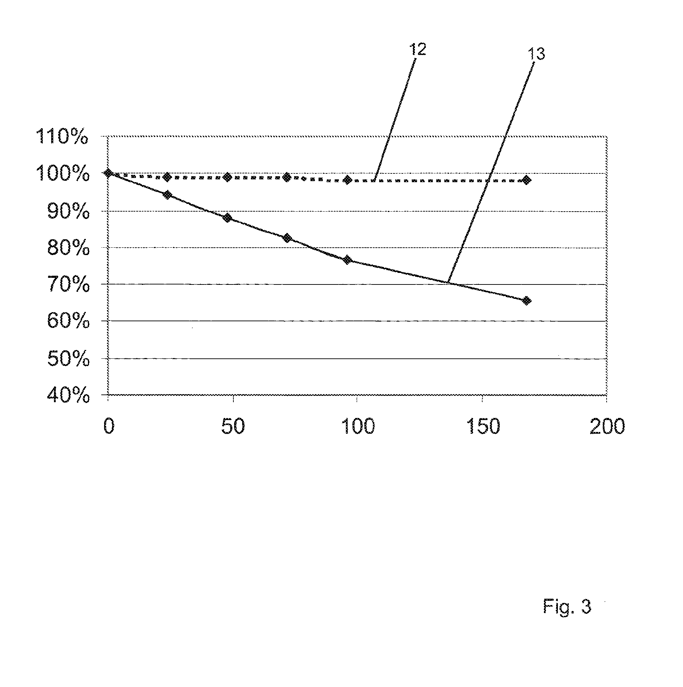

In Fig. 3 ist ein Diagramm zur Darstellung der Langzeitstabilität eines außerhalb der Erfindung liegenden mit Ammoniumfluorid modifizierten Erdalkalimetallsilikat-Leuchtstoffs im Vergleich zu einem nicht modifizierten Erdalkalimetallsilikat-Leuchtstoff gemäß dem Stand der Technik dargestellt. Bei der Modifikation mit Ammoniumfluorid reagieren zwei feste pulverförmige Stoffe in einem trockenen Zustand. Bei dem dargestellten Beispiel wurden 25 g eines Erdalkalimetallsilikat-Leuchtstoffs der allgemeinen Formel $(Ba,Sr,Ca,Mg)_3SiO_5$:Eu mit 10 g fein vermahlenem $NH_4F$ vermischt und homogenisiert. Das Gemenge wurde auf ein Aluminiumoxidschiffchen in einen Röhrenofen gelegt und unter strömenden Stickstoff mit einem Volumenstrom von 5 l/min langsam auf eine Temperatur von 300°C erwärmt. Das Gemenge wurde für eine Dauer von 30 min unter diesen Bedingungen belassen und anschließend rasch abgekühlt. Ein Graph 12 stellt die relative Intensität dieses modifizierten Erdalkalimetallsilikat-Leuchtstoffs in Abhängigkeit von der Dauer in Stunden einer Lagerung bei einer Temperatur von 85°C und einer relativen Luftfeuchtigkeit von 85% dar. Dem Graphen 12 ist zu entnehmen, dass die relative Intensität des Leuchtstoffs nach einer Lagerdauer von 150 Stunden kaum abgenommen hat und weiterhin weit über 90% beträgt. Ein Graph 13 stellt die relative Intensität eines nicht modifizierten Erdalkalimetallsilikat-Leuchtstoffs gemäß dem Stand der Technik in Abhängigkeit von der Dauer in Stunden einer Lagerung bei 85°C und einer relativen Luftfeuchtigkeit von 85% dar. Bereits nach einer Lagerdauer von 150 Stunden hat die relative Intensität des Erdalkalimetallsilikat-Leuchtstoffs einen Wert von weniger als 70% angenommen.

Das beschriebene Verfahren eignet sich zu einer Modifikation der Oberfläche der Körner des Leuchtstoffs mit einem Fluorid oder einem Carbonat unter Verwendung der entsprechenden Ammoniumverbindungen.

**Bezugszeichenliste**

01    Graph der Langzeitstabilität eines durch Hexafluorosilikat modifizierten Erdalkalisilikat-Leuchtstoffs

02    Graph der Langzeitstabilität eines Erdalkalisilikat-Leuchtstoffs gemäß dem Stand der Technik

03    -

04    Graph der Langzeitstabilität eines mit Ammoniumcarbonatlösung modifizierten Erdalkalimetallsilikat-Leuchtstoffs

05    -

06    -

07    -

08    -

09    Graph der Langzeitstabilität eines Erdalkalisilikat-Leuchtstoffs gemäß dem Stand der Technik

10    -

11    -

12    Graph der Langzeitstabilität eines mit Ammoniumfluorid modifizierten Erdalkalimetallsilikat-Leuchtstoffs

13    Graph der Langzeitstabilität eines Erdalkalisilikat-Leuchtstoffs gemäß dem Stand der Technik

**Patentansprüche**

1. Leuchtstoff mit verbesserter Langzeitstabilität, der Strahlung in einem ersten Wellenlängenbereich absorbiert und Strahlung in einem zweiten sich vom ersten Wellenlängenbereich unterscheidenden Wellenlängenbereich emittiert, wobei der Leuchtstoff in Form von Körnern ausgebildet ist und ein Erdalkalimetallsilikat der allgemeinen chemischen Formel $EA_xSi_yO_z$ als Grundgitter aufweist, welches mit einem Aktivator dotiert ist, wobei EA durch ein oder mehrere Erdalkalimetalle gebildet ist und die Bedingung x, y, z > 0 gilt, **dadurch gekennzeichnet, dass** die Körner an ihrer Oberfläche dadurch chemisch modifiziert sind, dass zumindest Teile ihrer Oberfläche durch eine chemische Verbindung der allgemeinen Formel $EA_uZ_2$ gebildet sind; wobei Z durch Anionen gebildet ist, welche mit Kationen des EA chemisch vereinigbar sind und durch eine oder mehrere der folgenden chemischen Formeln beschrieben sind: $SO_4^{2-}$, $PO_4^{3-}$, $CO_3^{2-}$, $C_2O_4^{2-}$, $SiO_3^{2-}$, $SiF_6^{2-}$; wobei u einer Ionenladung der Anionen Z gleicht.

2. Leuchtstoff nach Anspruch 1, **dadurch gekennzeichnet, dass** sein Grundgitter durch eine der folgenden chemischen Formeln beschrieben ist:

- $(Ba_aSr_bCa_c)_2SiO_4$, wobei zumindest eine der Variablen a, b und c größer als Null ist und a + b + c = 1 gilt;
- $EA'_3MgSi_2O_8$, $EA'_2MgSi_2O_7$, $EA'_2MgSiO_5$, wobei EA' durch ein oder mehrere Erdalkalimetalle ausgenommen Magnesium gebildet ist;
- $EA_3SiO_5$; und
- $EASiO_3$.

3. Leuchtstoff nach Anspruch 1 oder 2, **dadurch gekennzeichnet, dass** der Aktivator durch $Eu^{2+}$ und/oder $Mn^{2+}$ gebildet ist.

4. Leuchtstoff nach einem der Ansprüche 1 bis 3, **dadurch gekennzeichnet, dass** jeweils die gesamte Oberfläche der Körner des Leuchtstoffs durch die chemische Verbindung der allgemeinen Formel $EA_uZ_2$ gebildet ist.

5. Verfahren zur Verbesserung der Langzeitstabilität von Leuchtstoffen, die in Form von Körnern ausgebildet sind und ein Erdalkalimetallsilikat der allgemeinen chemischen Formel $EA_xSi_yO_z$ als Grundgitter aufweisen, wobei EA durch ein oder mehrere Erdalkalimetalle gebildet ist und die Bedingung x, y, z > 0 gilt, die folgenden Schritte umfassend:

   - Auswählen eines chemischen Stoffes, welcher Anionen zur Verfügung stellt, welche mit Kationen des EA chemisch vereinigbar sind und durch eine oder mehrere der folgenden chemischen Formeln beschrieben sind: $SO_4^{2-}$, $PO_4^{3-}$, $CO_3^{2-}$, $C_2O_4^{2-}$, $SiO_3^{2-}$, $SiF_6^{2-}$;
   - Vermischen der Körner des Leuchtstoffs mit dem chemischen Stoff;
   - Bereitstellen von Bedingungen für eine chemische Reaktion zwischen dem chemischen Stoff und der Oberfläche der Körner des Leuchtstoffes; und
   - Separieren der Körner des Leuchtstoffes.

6. Verfahren nach Anspruch 5, **dadurch gekennzeichnet, dass**:

   - das Auswählen des chemischen Stoffes dadurch erfolgt, dass eine die Anionen enthaltende chemische Verbindung ausgewählt und in Wasser aufgelöst wird;
   - das Vermischen der Körner des Leuchtstoffes mit dem chemischen Stoff dadurch erfolgt, dass die Körner in die wässrige Lösung gegeben werden und die wässrige Lösung umgerührt wird; und
   - das Separieren der Körner des Leuchtstoffes durch ein Trocknen der Körner erfolgt.

7. Verfahren nach Anspruch 5, **dadurch gekennzeichnet, dass**:

   - der chemische Stoff in Form eines Gases ausgewählt wird; und
   - das Vermischen der Körner des Leuchtstoffes mit dem chemischen Stoff dadurch erfolgt, dass die Körner vom Gas umströmt werden.

8. Verfahren nach Anspruch 5, **dadurch gekennzeichnet, dass**:

   - das Auswählen des chemischen Stoffes dadurch erfolgt, dass eine pulverförmige die Anionen enthaltende chemische Verbindung ausgewählt wird; und
   - das Vermischen der Körner des Leuchtstoffes mit dem chemischen Stoff dadurch erfolgt, dass die Körner mit der pulverförmigen Verbindung vermengt und homogenisiert werden.

## Claims

1. A luminophore having improved long-term stability, which absorbs radiation in a first wavelength range and emits radiation in a second wavelength range that is different from the first wavelength range, the luminophore being designed in the form of grains and comprising an alkaline earth metal silicate of general chemical formula $EA_xSi_yO_z$ as a base lattice, which is doped with an activator, EA being formed by one or more alkaline earth metals and the condition x, y, z > 0 being applicable, **characterised in that** the grains are chemically modified on their surface such that at least parts of their surface are formed by a chemical compound of general formula $EA_uZ_2$, Z being formed by anions which can be chemically combined with cations of EA and which are described by one or more of the following chemical formulas: $SO_4^{2-}$, $PO_4^{3-}$, $CO_3^{2-}$, $C_2O_4^{2-}$, $SiO_3^{2-}$, and $SiF_6^{2-}$; u being equal to an ion charge of the anions Z.

2. The luminophore according to Claim 1, **characterised in that** its base lattice is described by one of the following chemical formulas:

   - $(Ba_aSr_bCa_c)_2SiO_4$, at least one of the variables a, b and c being greater than zero, and a + b + c = 1;
   - $EA'_3MgSi_2O_8$, $EA'_2MgSi_2O_7$, $EA'_2MgSiO_5$, EA' being formed by one or more alkaline earth metals excluding magnesium;

- $EA_3SiO_5$; and
- $EASiO_3$.

3. The luminophore according to Claim 1 or 2, **characterised in that** the activator is formed by $Eu^{2+}$ and/or $Mn^{2+}$.

4. The luminophore according to one of Claims 1 to 3, **characterised in that** the entire surface of each of the grains of the luminophore is formed by the chemical compound of general formula $EA_uZ_2$.

5. A method for improving the long-term stability of luminophores which are designed in the form of grains and comprise an alkaline earth metal silicate of general chemical formula $EA_xSi_yO_z$ as a base lattice, EA being formed by one or more alkaline earth metals, and the condition x, y, z > 0 being applicable, said method comprising the following steps:

- selecting a chemical substance which makes available anions that can be combined chemically with cations of EA and that are described by one or more of the following chemical formulas: $SO_4^{2-}$, $PO_4^{3-}$, $CO_3^{2-}$, $C_2O_4^{2-}$, $SiO_3^{2-}$, $SiF_6^{2-}$;
- mixing the grains of the luminophore with the chemical substance;
- preparing conditions for a chemical reaction between the chemical substance and the surface of the grains of the luminophore; and
- separating the grains of the luminophore.

6. The method according to Claim 5, **characterised in that**:

- the chemical substance is selected by selecting a chemical compound containing the anions and by dissolving said chemical compound in water;
- the grains of the luminophore are mixed with the chemical substance by introducing the grains into the aqueous solution and stirring the aqueous solution;
and
- the grains of the luminophore are separated by drying the grains.

7. The method according to Claim 5, **characterised in that**:

- the chemical substance is selected in the form of a gas; and
- the grains of the luminophore are mixed with the chemical substance by circulating the gas around the grains.

8. The method according to Claim 5, **characterised in that**:

- the chemical substance is selected by selecting a powdered chemical compound containing the anions; and
- the grains of the luminophore are mixed with the chemical substance by blending and homogenising the grains with the powdered compound.

**Revendications**

1. Substance luminescente pourvue d'une stabilité à long terme améliorée, absorbant un rayonnement dans un premier domaine de longueur d'onde et émettant un rayonnement dans un deuxième domaine de longueur d'onde se distinguant du premier domaine de longueur d'onde, ladite substance luminescente étant réalisée sous forme de grains et présentant en tant que réseau de base un silicate de métaux alcalino-terreux de formule chimique générale $EA_xSi_yO_z$ dopé avec un activateur, EA étant constitué d'un ou plusieurs métaux alcalino-terreux et la condition x, y, z > 0 étant remplie, **caractérisée en ce que** la surface des grains subit une modification chimique de façon à ce que leur surface soit au moins partiellement constituée d'un composé chimique de formule générale $EA_uZ_2$, Z étant constitué d'anions qui peuvent être chimiquement combinés avec des cations de EA et qui sont décrits par une ou plusieurs des formules chimiques suivantes : $SO_4^{2-}$, $PO_4^{3-}$, $CO_3^{2-}$, $C_2O_4^{2-}$, $SiO_3^{2-}$, $SiF_6^{2-}$; u étant égal à la charge ionique des anions Z.

2. Substance luminescente selon la revendication 1, **caractérisée en ce que** son réseau de base est décrit par l'une des formules chimiques suivantes:

- $(Ba_aSr_bCa_c)_2SiO_4$, au moins une des variables a, b, c étant supérieure à zéro et a + b + c = 1 ;

- EA'$_3$MgSi$_2$O$_8$, EA'$_2$MgSi$_2$O$_7$, EA'$_2$MgSiO$_5$, EA' étant constitué d'un ou plusieurs métaux alcalino-terreux excepté le magnésium ;
- EA$_3$SiO$_5$ ; et
- EASiO$_3$.

3. Substance luminescente selon la revendication 1 ou 2, **caractérisée en ce que** ledit activateur est constitué de Eu$^{2+}$ et/ou Mn$^{2+}$.

4. Substance luminescente selon l'une des revendications 1 à 3, **caractérisée en ce que** la totalité de la surface de chacun des grains de la substance luminescente est constituée du composé chimique de formule générale EA$_u$Z$_2$.

5. Procédé destiné à améliorer la stabilité à long terme de substances luminescentes réalisées sous forme de grains et présentant en tant que réseau de base un silicate de métaux alcalino-terreux de formule chimique générale EA$_x$Si$_y$O$_z$, EA étant constitué d'un ou plusieurs métaux alcalino-terreux et la condition x, y, z > 0 étant remplie, comprenant les étapes suivantes:

   - sélection d'une substance chimique mettant à disposition des anions pouvant être chimiquement combinés avec des cations du EA et étant décrits par une ou plusieurs des formules chimiques suivantes : SO$_4$$^{2-}$, PO$_4$$^{3-}$, CO$_3$$^{2-}$, C$_2$O$_4$$^{2-}$, SiO$_3$$^{2-}$, SiF$_6$$^{2-}$;
   - mélange des grains de la substance luminescente avec ladite substance chimique ;
   - établissement de conditions permettant une réaction chimique entre ladite substance chimique et la surface des grains de la substance luminescente ; et
   - séparation des grains de la substance luminescente.

6. Procédé selon la revendication 5, **caractérisé en ce que**:

   - la substance chimique est sélectionnée tel que l'on sélectionne un composé chimique contenant lesdits anions et l'on le dissout dans l'eau ;
   - le mélange des grains de la substance luminescente avec la substance chimique est réalisé en introduisant les grains dans la solution aqueuse et en agitant ladite solution aqueuse ; et
   - les grains de la substance luminescente sont séparés en séchant lesdits grains.

7. Procédé selon la revendication 5, **caractérisé en ce que**:

   - la substance chimique est sélectionnée sous forme d'un gaz ; et
   - le mélange des grains de la substance luminescente avec la substance chimique est réalisé en exposant les grains à un flux dudit gaz.

8. Procédé selon la revendication 5, **caractérisé en ce que**:

   - la substance chimique est sélectionnée tel que l'on sélectionne un composé chimique pulvérulent contenant lesdits anions ;
   - le mélange des grains de la substance luminescente avec la substance chimique est réalisé en incorporant lesdits grains audit au composé pulvérulent et les soumettant à une homogénéisation.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 293128 A5
- EP 1124913 B1
- WO 0022065 A1
- DE 69830180 T2
- DE 102007056343 A1
- WO 2009065480 A1
- EP 1160835 A1
- WO 2009003988 A1
- EP 0887397 A1
- DE 19937420 C1
- WO 0056471 A1
- DE 102007053285 A1
- US 2009050848 A1

**In der Beschreibung aufgeführte Nicht-Patentliteratur**

- **GUO, C. ; LUAN, L. ; HUANG, D ; SU, Q. ; LV, Y.** Study on the stability of phosphor SrAl2O4:Eu2+, Dy3+ in water and method to improve its moisture resistance. *Materials Chemistry and Physics,* 2007, vol. 106, 268-272
- **GUO, C. ; CHU, B. ; SU, Q.** Improving the stability of alkaline earth sulfide-based phosphors. *Applied Surface Science,* 2004, vol. 225, 198-203